# EUROPÄISCHE PATENTSCHRIFT

(11) **EP 0 857 671 B1**
(45) Veröffentlichungstag und Bekanntmachung des Hinweises auf die Patenterteilung: **20.11.2002**
(21) Anmeldenummer: 98100380.9
(22) Anmeldetag: 12.01.1998
(51) Int. Cl.: B65G 47/24

(54) **Einrichtung zum Wenden von Dosenkörpern**
Device for turning can bodies
Dispositif pour retourner des corps de boîtes

(30) Priorität: 05.02.1997 DE 19704200
(43) Veröffentlichungstag der Anmeldung: 12.08.1998
(73) Patentinhaber: SIG Cantec GmbH & Co. KG, 45143 Essen (DE)
(72) Erfinder: Lentz, Norbert, Dr.-Ing., 45259 Essen (DE); Rötz, Steffen, Dr.-Ing., 45359 Essen (DE); Witt, Karl-Heinz, 45665 Recklinghausen (DE)
(74) Vertreter: Vomberg, Friedhelm, Dipl.-Phys.

(56) Entgegenhaltungen:
- EP-A- 0 337 906
- EP-A- 0 439 897
- US-A- 2 335 239
- US-A- 4 883 578

## Beschreibung

Die Erfindung betrifft eine Einrichtung zum Wenden von Dosenkörpern mit einer Vielzahl von Wendeelementen, die, in gleichen Abständen auf einem Teilkreis angeordnet, in einem Rotationskörper gelagert sind, und mit einem Einlauf und einem Auslauf und ein Verfahren zum Betreiben der Einrichtung, bei dem den Wendeelementen in einer Einlaufposition Dosenkörper zugeführt, von den Wendeelementen um 180° gewendet und im gleichen Takt in einer Ausgangsposition in gewendeter Position abgegeben werden.

Bei der Herstellung sowohl von 2-Teildosen als auch von 3-Teildosen besteht häufig die Notwendigkeit, die Dosenkörper - Dosenzargen und teilweise fertige Dosen - zwischen zwei Bearbeitungsstationen bzw. -maschinen zu wenden, damit das jeweils umzuformende Ende des Dosenkörpers dem Umformwerkzeug zugewandt ist. Dabei kommen - in Abhängigkeit vom Herstellungsprozeß - mindestens zwei Fälle vor: Es muß *jeder* oder *jeder zweite* (ggf. auch *jeder dritte, usw.*) Dosenkörper gewendet werden.

Aus der US 4 915 210 ist eine Lackiervorrichtung für Dosen (apparatus for electro-coating metal can bodies) mit einem großen, um eine senkrechte Hochachse drehbaren Rotationskörper bekannt, an dessen Umfang eine Vielzahl von Lackierstationen angeordnet sind. Die dort fertig lackierten Dosen werden an eine Wendeeinrichtung abgegeben, die wiederum einen Rotationskörper aufweist, an dessen Mantelfläche um eine waagerechte Achse drehbare Aufnahmebacken oder -taschen angeordnet sind, die die lackierten Dosen um 180° wenden. Nach dem Wenden werden die Dosen an ein Abförderband abgegeben.

Weiterhin werden zum Wenden von Dosenkörpern sog. Wende- oder Twistkörbe verwendet. In der US-PS 3 687 258 *Wolzak,* Fig. 1, ist ein solcher Wendekorb offenbart, der für eine Drehung der Dosenkörper um 90° geeignet ist. Nachteilig ist hierbei, daß ein Gefälle vorhanden sein muß und so zur Verbindung zweier gleich hoher Bearbeitungsstationen ein zusätzlicher Aufwärtsförderer notwendig ist, wodurch sich auch ein sehr großer Abstand zwischen den einzelnen Bearbeitungsmaschinen bzw. -einheiten ergibt und ein entsprechender Raumbedarf erforderlich ist. Weiterhin ist ein solcher Wendekorb nicht geeignet, nur jeden zweiten Dosenkörper zu wenden und die übrigen in ihrer Lage zu belassen. Um aus einer Reihe von Dosenkörpern nur jeden 2. oder 3. usw. Dosenkörper wenden zu können, sind bei der bekannten Vorrichtung zusätzliche, über sog. Weichen gesteuerte, Parallelstrecken mit anschließender Zusammenführung notwendig. Derartige zusätzliche Einrichtungen erhöhen aber nicht nur auch den Platzbedarf der Gesamtanlage sondern auch den Bedarf an Steuerung der gesamten Bearbeitungsanlage, insbesondere für Staustrecken am Aus- und Einlauf der benachbarten Bearbeitungseinheiten.

Eine weitere Möglichkeit zum Wenden von Dosenkörpern sog. Zweiteildosen in ihrer Ausrichtung um 180° ergibt sich durch die Verwendung von Magneträdern, vgl. hierzu US-PS 4 593 805 *Huddle*, insbes. Fig. 8 und 8a. Mit der dort offenbarten Einrichtung können zwar Dosenkörper, die mit dem Boden am Magnetrad haften, von Dosenkörpern, die mit ihrem offenen Ende dem Magnetrad zugewandt sind, voneinander getrennt werden, es ist mit ihr aber nicht möglich, aus einer Reihe gleich ausgerichteter Dosenkörper nur jeden zweiten zu wenden bzw. jede zweite Dose nicht zu wenden. Auch in dieser Schrift ist zusätzlich ein Wendekorb (*twist chute*) zum Wenden von Dosenkörpern offenbart.

Ergäntend wird noch auf die Wendeeinrichtung gemäß EP 0 337 906 hingewiesen.

Beim Betreiben der angeführten Vorrichtungen gemäß dem Stand der Technik zeigt sich beim Transport der Dosenkörper zudem kein definierter Abstand.

Bei dem eingangs angeführten Wendekorb und bei der bekannten Magnetradanordnung richtet sich der Abstand zwischen den Dosenkörpern im wesentlichen nach der Bandgeschwindigkeit des Abförderbandes. Es kann aber auch zu einem Dosenstau kommen. Ein definierter Abstand zwischen den Dosenkörpern ist aber zur Weiterverarbeitung in der nachfolgenden Bearbeitungsmaschine zwingend erforderlich.

Der Erfindung liegt die Aufgabe zugrunde, eine Einrichtung zum Wenden von Dosenkörpern unterschiedlicher Höhe zu schaffen, die zwischen dem Einlauf und dem Auslauf der Dosenkörper im wesentlichen keinen Höhenunterschied aufweist und die in der Lage ist, nur z.B. jeden zweiten Dosenkörper zu wenden. Außerdem soll ein Verfahren zum Betreiben der Einrichtung angegeben werden. Der Ausdruck "im wesentlichen keinen Höhenunterschied" ist im Hinblick auf Wendekörbe und Magneträder dahingehend zu verstehen, daß der Höhenunterschied zwischen Einlauf und Auslauf zumindest kleiner als die Höhe der zu wendenden Dosenkörper ist.

Diese Aufgabe wird erfindungsgemäß dadurch gelöst, daß die Wendelemente einzeln über eine lösbare Verbindung steuerbar sind. Dadurch können die Dosenkörper im Auslaufbereich wahlweise gewendet oder ungewendet abgegeben werden.

Vorteilhafte Weiterbildungen der Erfindung sind in den Unteransprüchen beschrieben. So ist für einen störungsfreien Betrieb zur Steuerung der Wendeelemente eine fest um die Drehachse des Rotationskörpers angeordnete Steuerkurve, vorzugsweise am Mantel eines zylindrischen Kurvenkörpers, vorgesehen. Daneben sind aber auch hydraulisch, pneumatisch oder elektromagnetisch eingeleitete Steuerbewegungen im Rahmen des Erfindungsgedankens ausführbar.

Die lösbare Verbindung zwischen der Steuerkurve und den Wendeelementen ist bei einer Weiterbildung der Erfindung durch einen Stößel (Pinole und Stange), eine mit diesem verbundene Zahnstange und ein mit der Zahnstange im Eingriff befindliches Zahnrad gebildet. Dabei ist die Lösbarkeit der Verbindung zwischen dem Stößel (Pinole) und dem Wendeelement und insbesondere zwischen dem Stößel (Stange) und der Zahnstange vorgesehen.

Damit Dosenkörper unterschiedlicher Höhe gewendet werden können, ist die Drehachse der Wendeelemente gegenüber der Transportebene der Dosenkörper veränderbar und die Zahnstange in verschiedenen Positionen am Stößel befestigbar.

Die Hubhöhe der Steuerkurve und der Durchmesser des Zahnrades sind bei einer bevorzugten Ausführungsform derart beschaffen, daß die Wendeelemente bei einem Umlauf des Rotationskörpers zwischen dem Einlauf und dem Auslauf und zwischen dem Auslauf und dem Einlauf jeweils eine Drehung um 180° ausführen.

Zur sicheren Aufnahme und zum sicheren Halten der Dosenkörper sind die Wendeelmente als Wendebacken mit konkaver Aufnahmefläche ausgebildet und an ihrer Aufnahmefläche mit Halteelementen ausgerüstet, die zum Wenden von Dosenkörpern aus ferromagnetischem Material als Dauermagnete ausgebildet sind.

Um eine möglichst platzsparende Bauweise und ein betriebssicheres und störungsfreies Wenden von Dosenkörpern zu erreichen, ist die Wendeeinrichtung bei einer besonders vorteilhaften Ausbildung zwischen zwei mit Rotationskörpern mit mehreren Stationen ausgerüsteten Bearbeitungseinheiten einer Mehrfachkombinationsmaschine integriert, wobei der Abstand zwischen den einzelnen Wendeelementen gleich dem Abstand zwischen einzelnen Stationen der Rotationskörper der Bearbeitungseinheiten ist. Der Ein- und Auslauf der Wendeeinrichtung ist dabei vorzugsweise als Übergabestern ausgebildet, dessen Aufnahmetaschen - als Bogenmaß - die gleiche Teilung bzw. den gleichen Abstand aufweisen, wie jeweils die Wendeelemente und die Stationen der Rotationskörper der Bearbeitungseinheiten untereinander.

Ein Verfahren zum Betreiben der oben beschriebenen Einrichtung zum Wenden von Dosenkörpern zeichnet sich dadurch aus, daß von den insgesamt der Einrichtung zugegebenen Dosenkörpern lediglich jeder *n*-te, insbes. jeder zweite gewendet wird, indem die Steuerung der Wendebacken entsprechend individuell zu- bzw. abgeschaltet wird. In besonderen Fällen ist es auch möglich, daß überhaupt kein Dosenkörper gewendet wird, wenn nämlich sämtliche Verbindungen zwischen der Steuerkurve und den Wendeelementen wirksam gelöst sind.

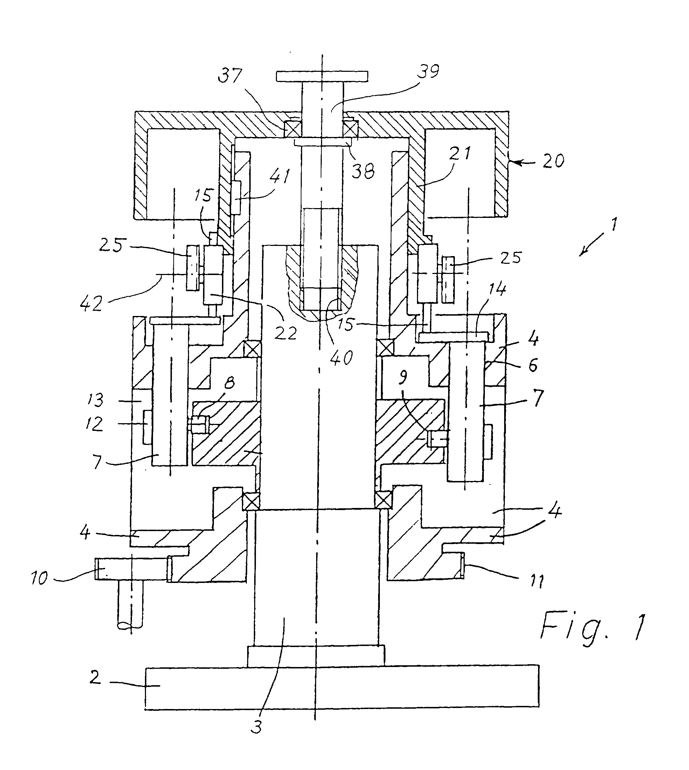

Ein Ausführungsbeispiel der Erfindung ist in der Zeichnung dargestellt und wird im folgenden näher erläutert. Es zeigen
- Fig. 1: eine Wendeeinrichtung in einem schematischen Längsschnitt,
- Fig. 2: eine Station der Wendeeinrichtung in einem auszugsweisen Längsschnitt,
- Fig. 3: die Station der Wendeeinrichtung mit um 180° gedrehter Wendebacke in einem auszugsweisen Längsschnitt,
- Fig. 4: die Station der Wendeeinrichtung in einem auszugsweisen Querschnitt längs der Linie IV-IV in Fig. 2 und
- Fig. 5: die zwischen zwei Bearbeitungsmaschinen integrierte Wendeeinrichtung in einer schematischen Draufsicht.

Die Wendeeinrichtung **1** zum Wenden von Dosenkörpern ***C*** weist eine senkrecht auf einem Maschinenfundament **2** befestigte Säule **3** auf, an der ein Revolver- oder Rotationskörper **4** radial und axial spielfrei um deren Mittelachse **5,** im folgenden auch als senkrechte Hochachse bezeichnet, drehbar gelagert ist. Der Rotationskörper **4** weist in einem Bereich mittlerer Höhe - gleichmäßig auf einem gedachten Teilkreis **4'** verteilt - eine Vielzahl von Bohrungen oder Pinolenführungen **6** auf, in denen Pinolen **7** derart gleitbar gelagert sind, daß sie in Richtung der Achse **5** relativ zum Rotationskörper **4** bewegbar geführt sind. Der gegenseitige Abstand der Pinolenführungen **6** bzw. Pinolen **7** ist durch die Bogenlänge ***b4*** auf dem Teilkreis **4'** gegeben. Wegen seiner Funktion in bezug auf die Pinolen **7** wird der Rotationskörper **4** auch als Führungskranz bezeichnet. Die senkrechte Bewegung der Pinolen **7** wird, wenn der Rotationskörper **4** um die Säule **3** gedreht wird, durch eine an der Pinole **7** angeordnete Steuerrolle **8** bewirkt, die im Eingriff mit einer um die Achse **5** angeordneten Hub- oder Steuerkurve **9** am Mantel eines an der Säule **3** befestigten zylindrischen Kurvenkörpers steht. Der Antrieb für den Rotationskörper **4** erfolgt über ein Zahnritzel **10,** das sich mit einem am Rotationskörper **4** angeordneten Zahnkranz **11** im Eingriff befindet.

Die Pinolen **7** sind mit einem Keil bzw. einer Feder **12** versehen, der bzw. die in einer bei der zugehörigen Pinolenführung **6** angeordneten, entsprechenden Führungsnut **13** gleitet und die Pinole verdrehsicher gegenüber der dem Rotationskörper **4** hält.

Am oberen Ende weist jede Pinole **7** ein Verbindungsstück **14** auf, an dem eine Stange **15** befestigt ist, die eine am Rotationskörper **4** befestigte ringförmige Aufnahmeplatte **16** jeweils in einer entsprechenden Bohrung bzw. Ausnehmung **17** durchdringt und die an ihrem oberen Ende eine Zahnstange **18** trägt. Die Zahnstangen **18** sind beispielsweise durch mit **19** angedeutete Schrauben lösbar mit der jeweiligen Stange verbunden.

Der Rotationskörper **4** weist einen in der Höhe einstellbaren Kopf **20** mit einem hülsenförmigen Trag- oder Konstruktionsteilteil **21** auf, an dem zu jeder Ausnehmung **17** ein Lagergehäuse **22** angeordnet ist. Jedes Lagergehäuse **22** beherbergt ein drehbares Zahnrad **23.** Die das Zahnrad **23** verdrehfest tragende Welle **24** tritt mit ihrem von der Achse **5** wegweisenden Ende aus dem Gehäuse aus und trägt dort eine Wendebacke oder Haltetasche **25** mit konkaven Aufnahmeflächen für die Dosenkörper ***C***. Durch die später näher erläuterte Einstellbarkeit des Kopfes **20** mit dem Tragteil **21** gegenüber dem übrigen Rotationskörper **4** ist auch die Höhe der Drehachse **42** der Welle **24** und damit der Wendebacke **25** gegenüber der Aufnahmeplatte **16** für zu wendende Dosenkörper ***C*** unterschiedlicher Höhe einstellbar. Dabei erstreckt sich die Achse **42** der Wendebacken **25** radial bzw. senkrecht zur Hochachse **5.**

Zum Halten von Dosenkörpern ***C*** aus ferromagnetischem Material sind die Wendebacken **25** an ihren Aufnahmeflächen mit Dauermagneten **26** bestückt. Zum Halten von Dosenkörpern aus nichtmagnetischem Material können die Wendebacken mit (nicht dargestellten, an sich bekannten) Vakuumsaugöffnungen versehen sein.

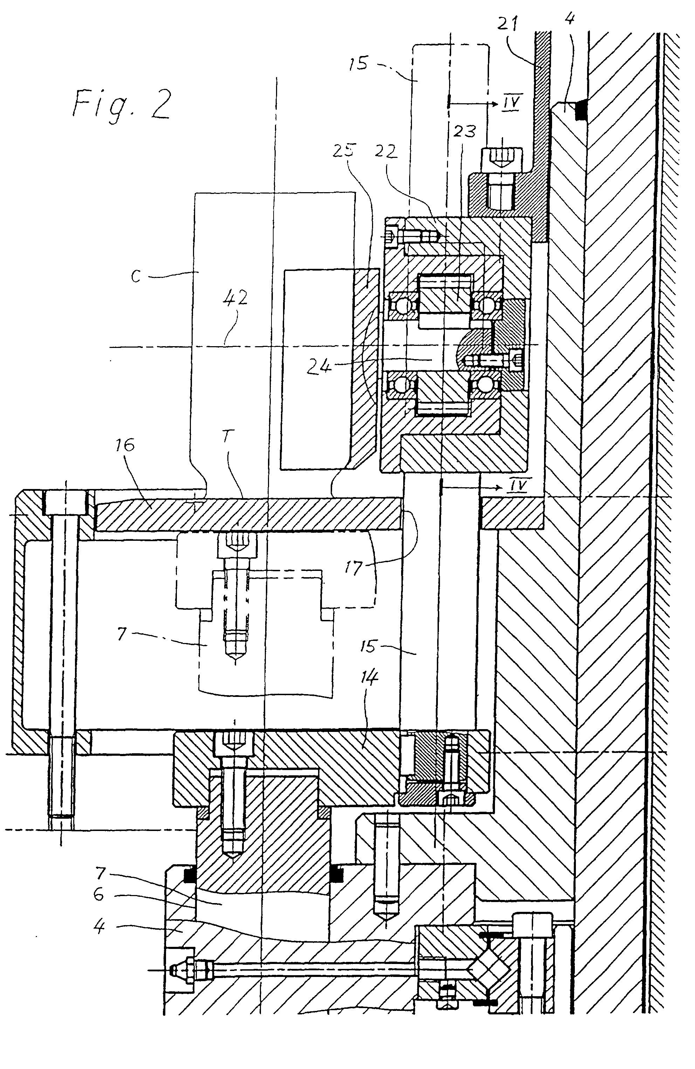

Wie aus Fig. 2 ersichtlich ist, durchdringt die Stange **15** mit der Zahnstange **18** das Gehäuse **22** derart, daß das Zahnrad **23** und die Zahnstange **18** miteinander im Eingriff stehen. Die Hubhöhe der Steuerkurve **9** ist derart bemessen, daß das Zahnrad **23** und mit ihm die Wendebacke **25** bei jeder Umdrehung des Rotationskörpers **4** jeweils zwei Drehungen um genau 180° ausführen.

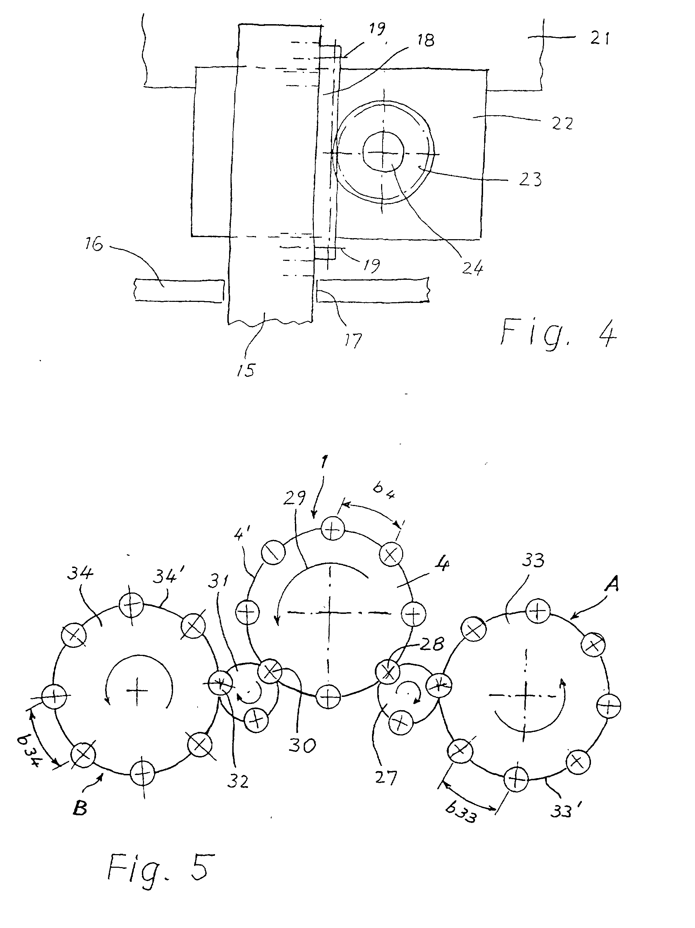

Bei dem aus Fig. 5 ersichtlichen Ausführungsbeispiel ist die Wendeeinrichtung **1** zwischen zwei Bearbeitungsmaschinen ***A*** und ***B*** integriert. Die Bearbeitungsmaschinen ***A*** und ***B*** weisen - wie die Wendeeinrichtung 1 - je einen Rotationskörper **33** bzw. **34** auf, der jeweils mit einer Vielzahl von Stationen **35** bzw. **36** ausgerüstet ist. Die einzelnen Stationen **35, 36** sind gleichmäßig auf einem gedachten Teilkreis **33'** bzw. **34'** auf den Rotationskörpern **33, 34** angeordnet. Ihr gegenseitiger Abstand ist durch die Bogenlänge ***b33*** bzw. ***b34*** gegeben, die gleich der Bogenlänge ***b4*** zwischen den Pinolen **7** der Wendeeinheit **1** ist. In dem betrachteten Ausführungsbeispiel neckt und bördelt die Bearbeitungsmaschine 1 den unteren Bereich bzw. das untere Ende des Dosenkörpers ***C*** und gibt diesen in der aus Fig. 2 ersichtlichen Ausrichtung an den als Übergabestern fungierenden Einlaufstern **27** der Wendeeinrichtung **1** ab, der ihn bis zu der in der Einlauf- oder Übernahmeposition **28** der Wendeeinrichtung befindlichen Station transportiert.

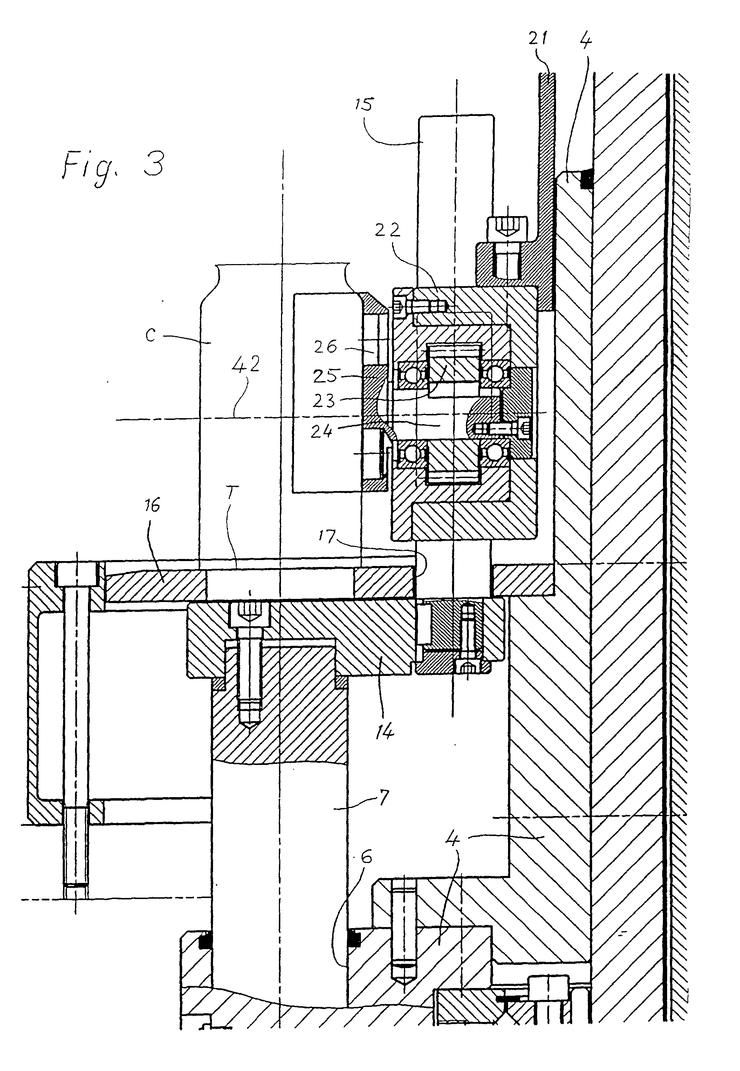

Auf dem Weg im Sinne des Pfeiles **29** von der Übernahmeposition **28** bis zur Auslaufposition **30** steigt die Hubhöhe der fest um die Säule **3** angeordnete Steuerkurve **9** derart an und wird die an der Stange **15** befestigte Zahnstange **18** entsprechend derart angehoben, daß das Zahnrad **23** und mit diesem die Wendebacke **25** mit dem daran befindlichen Dosenkörper ***C*** um genau 180° in die aus Fig. 3 ersichtliche Ausrichtung gedreht bzw. gewendet wird. In dieser Ausrichtung wird der Dosenkörper ***C*** von dem Auslaufstern **31** zur Bearbeitungsmaschine ***B*** transportiert und dort weiterbearbeitet.

Von der Auslaufposition **30** bis zur Einlaufposition **28 -** wiederum in Umlaufrichtung des Rotationskörpers **4** im Sinne des Pfeiles **29 -** fällt die Steuerkurve **9** wieder auf ihre Ausgangshöhe ab, so daß auch die Pinolen **7** wieder in ihre Ausgangslage abgesenkt und die Wendebacken **25** um 180° zurückgeschwenkt werden und so zur Aufnahme eines neuen Dosenkörpers C bereit sind.

Bei Bedarf können die Schrauben **19** und damit die Verbindung zwischen der Zahnstange **18** und der an der Pinole **7** befestigten Stange **15** z.B. bei jeder zweiten Station der Wendeeinrichtung **1** gelöst und die Zahnstange ggf. entfernt werden. Es besteht dann kein wirksamer Eingriff mehr zwischen der Zahnstange **18** und dem Zahnrad **23** der betreffenden Station: Die betreffende Wendebacke **25** wird nicht mehr gedreht und in sie einlaufende und von ihr erfaßte Dosenkörper ***C*** werden durch die Wendeeinrichtung transportiert und nicht gewendet, sondern in ihrer ursprünglichen Ausrichtung von der Wendeeinrichtung 1 abgegeben. Die Wendebacken werden in diesem Fall, um eine eindeutige Lage einzuhalten, arretiert.

Damit die Zahnstangen **18** der Höhe der Drehachsen **42** der Wendebacken 25 angepaßt werden können, weisen die Pinolen **15**, wie in Fig. 4 durch strichpunktierte Linien angedeutet, mehrere Gewindelöcher übereinander auf, so daß die Zahnstangen in verschiedenen Höhen an den Pinolen befestigt werden können. Damit die Höheneinstellung stufenlos erfolgen kann, sind die Zahnstangen **18** in bekannter Weise mit entsprechenden Langlöchern versehen.

Wie bereits beschrieben, weist der Rotationskörper **4** einen höhenverstellbaren Kopf **20** mit einem hülsenförmigen Trag- oder Konstruktionsteil **21** auf. Dazu ist der Kopf **20** über ein Lager **37** auf einem Flansch **38** einer Gewindespindel **39 -** um die senkrechte Hochachse **5** drehbar - abgestützt. Die Gewindespindel **39** selbst ist in einem Innengewinde **40** im oberen Teil der Säule **3** gelagert. Beim Drehen der Gewindespindel **39** um die senkrechte Hochachse **5** und damit um ihre eigene Achse in einer Richtung, wird sie in die Säule **3** hineingeschraubt und der Kopf **20** entsprechend abgesenkt. Wird die Gewindespindel **39** dagegen in umgekehrter Richtung gedreht, so wird der Kopf **20** und mit ihm das hülsenförmige Tragteil **21** und die Lagergehäuse **22** mit den Wendebacken **25** entsprechend angehoben. Damit kann die Höhe der Drehachse **42** der Wendebacken **25** zur Berücksichtigung verschieden hohe Dosenkörper ***C*** über der jeweiligen Transportebene ***T*** verändert werden.

Damit der Kopf **20** die gleiche Rotationsbewegung ausführt wie der Führungskranz bzw. der übrige Rotationskörper **4** bzw., anders ausgedrückt, damit der Kopf **20** und der Rotationskörper **4** stets die gleiche Winkellage zueinander einnehmen, sind beide Teile durch eine Verdrehsicherung, im dargestellten Ausführungsbeispiel durch eine Paßfeder- oder Keilverbindung **41** gegen gegenseitiges Verdrehen gesichert.

### Bezugszeichenliste

- **1**: Wendeeinrichtung
- **2**: Machinenfundament

- **3**: Säule
- **4**: Rotationskörper, Revolverkörper, Führungskranz
- **4'**: gedachter Teilkreis auf 4
- **5**: Mittelachse von 3, senkrechte Hochachse
- **6**: Pinolenführung, Bohrung
- **7**: Pinole
- **8**: Steuerrolle
- **9**: Steuerkurve, Hubkurve
- **10**: Zahnritzel
- **11**: Zahnkranz an 4
- **12**: Keil, Feder
- **13**: Führungsnut
- **14**: Verbindungsstück an 7
- **15**: Stange
- **16**: Aufnahmeplatte, Auflageplatte an 4
- **17**: Ausnehmung, Bohrung in 16

- **18**: Zahnstange
- **19**: Schrauben
- **20**: Kopf von 4
- **21**: Tragteil, Konstruktionsteil
- **22**: Lagergehäuse
- **23**: Zahnrad
- **24**: Welle
- **25**: Wendebacke, Haltetasche

- **26**: Dauermagneten
- **27**: Einlaufstern von 1
- **28**: Übernahmeposition, Einlaufposition von 1
- **29**: Pfeil
- **30**: Auslaufpostion von 1

- **31**: Auslaufstern von 1
- **32**: Übernahmeposition von *B*

- **33**: Rotationskörper von *A*
- **33'**: gedachter Teilkreis auf 33
- **34**: Rotationskörper von *B*
- **34'**: gedachter Teilkreis auf 34
- **35**: Station(en) auf 33
- **36**: Station(en) auf 34
- **37**: Lager
- **38**: Flansch
- **39**: Gewindespindel
- ***40***: Innengewinde
- ***41***: Paßfeder- oder Keilverbindung
- ***42***: Drehachse der Wendebacken

- ***A***: Bearbeitungsmaschine
- ***B***: Bearbeitungsmaschine
- ***b4***: Bogenlänge auf 4'
- ***b33***: Bogenlänge auf 33'
- ***b34***: Bogenlänge auf 34'
- ***C***: Dosenkörper
- ***T***: Transportebene

## Patentansprüche

1. Einrichtung (1) zum Wenden von Dosenkörpern (C), mit einer Vielzahl von Wendeelementen (25), die, in gleichen Abständen (b4) auf einem Teilkreis (4') angeordnet, in einem Rotationskörper (4) gelagert sind, einem Einlauf (27, 28) und einem Auslauf (30, 31),
**dadurch gekennzeichnet,**
**daß** die Wendeelemente (25) einzeln über eine lösbare Verbindung (15, 18, 19) steuerbar sind.

2. Einrichtung nach Anspruch 1, **dadurch gekennzeichnet, daß** zur Steuerung der Wendeelemente (25) eine fest um die Drehachse (5) des Rotationskörpers (4) angeordnete Steuerkurve (9) vorgesehen ist.

3. Einrichtung nach Anspruch 2, **dadurch gekennzeichnet, daß** die Steuerkurve (9) am Mantel eines zylindrischen Kurvenkörpers angeordnet ist.

4. Einrichtung nach Anspruch 1, **dadurch gekennzeichet,** daß die Verbindung (15, 18, 19, 23) zwischen der Steuerkurve (9) und den Wendeelementen (25) durch einen Stößel (Pinole 7, Stange 15), eine mit diesem verbundene Zahnstange (18) und ein mit der Zahnstange im Eingriff befindliches Zahnrad (23) gebildet ist.

5. Einrichtung nach Anspruch 4, **dadurch gekennzeichnet, daß** die Lösbarkeit der Verbindung (15, 18, 19, 23) zwischen dem Stößel (Pinole 7) und dem Wendeelement (25) vorgesehen ist.

6. Einrichtung nach Anspruch 5, **dadurch gekennzeichnet, daß** die Lösbarkeit der Verbindung (15, 18, 19, 23) zwischen dem Stößel (Stange 15) und der Zahnstange (18) vorgesehen ist.

7. Einrichtung nach Anspruch 6, **dadurch gekennzeichnet, daß** die Drehachse (42) der Wendeelemente (25) gegenüber der Transportebene (*T*) der Dosenkörper veränderbar und die Zahnstange (18) in verschiedenen Positionen gegenüber dem Stößel (Stange 15) befestigbar ist.

8. Einrichtung nach einem der Ansprüche 2 bis 7, **dadurch gekennzeichnet, daß** die Hubhöhe der Steuerkurve (9) und der Durchmesser des Zahnrades (23) derart beschaffen sind, daß die Wendeelemente (25) bei einem Umlauf des Rotationskörpers (4) zwischen dem Einlauf (27, 28) und dem Auslauf (30, 31) und zwischen dem Auslauf (30, 31) und dem Einlauf (27, 28) jeweils eine Drehung um 180° ausführen.

9. Einrichtung nach der Ansprüche 1 bis 8, **dadurch gekennzeichnet, daß** die Wendeelmente (25) als Wendebacken mit konkaver Aufnahmefläche ausgebildet sind.

10. Einrichtung nach Anspruch 9, **dadurch gekennzeichnet, daß** die Wendebacken (25) an ihrer Aufnahmefläche mit Halteelementen (26) ausgerüstet sind.

11. Einrichtung nach Anspruch 10, **dadurch gekennzeichnet, daß** die Halteelemente (26) als Dauermagnete ausgebildet sind.

12. Einrichtung nach einem der Ansprüche 1 bis 11, **dadurch gekennzeichnet, daß** sie zwischen zwei mit Rotationskörpern (33 bzw. 34) mit mehreren Stationen (35 bzw. 36) ausgerüsteten Bearbeitungseinheiten (*A*, *B*) einer Mehrfachkombinationsmaschine (*A*, 1, *B*) integriert ist, wobei der Abstand (*b33* bzw. *b34*) zwischen den Stationen (35, 36) der Rotationskörper (33, 34) gleich dem Abstand (*b4*) zwischen den Wendeelementen (25) ist.

13. Verfahren zum Wenden von Dosenkörpem mittels Wendeelementen, **dadurch gekennzeichnet, dass** in einer Einrichtung nach einem der Ansprüche 1 bis 12 ein Teil der Wendeelement von dem ihnen zugeordneten Steuerelement gelöst ist, so daß lediglich jeder n-te Dorenkörper (C), insbesondere jeder zweite, gewendet wird.

## Claims

1. Device (1) for turning can bodies (C) with a number of turning elements (25), which are arranged at the same distance (b4) along a pitch circle (4') and carried on a rotary body (4), with one infeed (27, 28) and one outfeed (30, 31),
**characterised in that**
the turning elements (25) can be controlled individually by means of a detachable connection (15, 18, 19).

2. Device according to claim 1, **characterised in that** a stationary cam (9) arranged around the rotary axis (5) of the rotary body (4) is provided for the control of the turning elements (25).

3. Device according to claim 2, **characterised in that** the cam (9) is arranged on the outer shell of a cylindrical cam body.

4. Device according to claim 1, **characterised in that** the connection (15, 18, 19, 23) between the cam (9) and the turning elements (25) is formed by a slide (spindle 7, rod 15), a toothed rack (18) connected to it and a gearwheel (23) meshing with this toothed rack.

5. Device according to claim 4, **characterised in that** the connection (15, 18, 19, 23) between the slide (spindle 7) and the turning element (25) can be separated.

6. Device according to claim 5, **characterised in that** the connection (15, 18, 19, 23) between the slide (rod 15) and the toothed rack (18) can be separated.

7. Device according to claim 6, **characterised in that** the rotary axis (42) of the turning elements (25) can be modified relative to the conveying level (T) of the can bodies and that the toothed rack (18) can be attached in various positions relative to the slide (rod 15).

8. Device according to one of claims 2 to 7, **characterised in that** the stroke of the cam (9) and the diameter of the gearwheel (23) are designed in such a way that the turning elements (25) carry out one 180° rotation during one rotation of the rotary body (4) between infeed (27, 28) and outfeed (30, 31) and between outfeed (30, 31) and infeed (27, 28).

9. Device according to one of claims 1 to 8, **characterised in that** the turning elements (25) are designed as turning jaws with concave supporting surfaces.

10. Device according to claim 9, **characterised in that** the supporting surfaces of the turning jaws (25) are equipped with holding elements (26).

11. Device according to claim 10, **characterised in that** the holding elements (26) are designed as permanent magnets.

12. Device according to one of claims 1 to 11, **characterised by** being integrated between two processing units (A, B), equipped with rotary bodies (33 respectively 34) with several stations (35 respectively 36), of a multiple combination machine (A, 1, B), whereby the spacing (b33 respectively b34) between the stations (35, 36) of the rotary bodies (33, 34) equals the distance (b4) between the turning elements (25).

13. Process for turning can bodies by means of turning elements, **characterised in that** part of the turning elements of a device according to one of claims 1 to 12 are detached from their respective controlling element so that every n^{th} can body (C), in particular every 2^{nd} body, is turned.

## Revendications

1. Dispositif (1) pour retourner des corps de boîtes (C), avec une multiplicité d'éléments de retournement (25) qui, disposés à distances égales (b4) sur un cercle partiel (4'), sont logés dans un corps de rotation (4), avec une entrée (27, 28) et avec une sortie (30, 31),
**caractérisé par le fait**
**que** lesdits éléments de retournement (25) peuvent être commandés individuellement par l'intermédiaire d'un assemblage amovible (15, 18, 19).

2. Dispositif selon la revendication 1, **caractérisé par le fait que**, pour commander les éléments de retournement (25), on prévoit une came de commande (9) disposée de manière fixe autour de l'axe de rotation (5) du corps de rotation (4).

3. Dispositif selon la revendication 2, **caractérisé par le fait que** la came de commande (9) est disposée sur la surface latérale d'un corps cylindrique de came.

4. Dispositif selon la revendication 1, **caractérisé par le fait que** la liaison (15, 18, 19, 23) entre la came de commande (9) et les éléments de retournement (25) est formée par un coulisseau (broche 7, tige 15), par une crémaillère (18) reliée à ce dernier et par une roue dentée (23) qui est en prise ave ladite crémaillère.

5. Dispositif selon la revendication 4, **caractérisé par le fait que** l'on prévoit que la liaison (15, 18, 19, 23) entre le coulisseau (la broche 7) et l'élément de retournement (25) est amovible.

6. Dispositif selon la revendication 5, **caractérisé par le fait que** l'on prévoit que la liaison (15, 18, 19, 23) entre le coulisseau (la tige 15) et la crémaillère (18) est amovible.

7. Dispositif selon la revendication 6, **caractérisé par le fait que** l'axe de rotation (42) des éléments de retournement (25) peut être modifié par rapport au plan de transport (T) des corps de boîtes et que la crémaillère (18) peut être fixée dans des positions différentes par rapport au coulisseau (tige 15).

8. Dispositif selon l'une des revendications 2 à 7, **caractérisé par le fait que** la levée de la came de commande (9) et le diamètre de la roue dentée (23) sont réalisés de telle manière que les éléments de retournement (25) exercent respectivement une rotation de 180° lors d'une rotation du corps de rotation (4) entre l'entrée (27, 28) et la sortie (30, 31) et entre la sortie (30, 31) et l'entrée (27, 28).

9. Dispositif selon l'une des revendications 1 à 8, **caractérisé par le fait que** les éléments de retournement (25) sont réalisés comme mâchoires de retournement avec une surface concave de réception.

10. Dispositif selon la revendication 9, **caractérisé par le fait que**, sur leur surface de réception, les mâchoires de retournement (25) sont équipées d'éléments de retenue (26).

11. Dispositif selon la revendication 10, **caractérisé par le fait que** les éléments de retenue (26) sont réalisés comme aimants permanents.

12. Dispositif selon l'une des revendications 1 à 11, **caractérisé par le fait qu'**il est intégré entre deux unités d'usinage (A, B) d'une machine combinée multiple (A, 1, B), qui sont équipées de corps de rotation (33 ou bien 34) avec plusieurs stations (35 ou bien 36), la distance (b33 ou bien b34) entre les stations (35, 36) des corps de rotation (33, 34) étant égale à la distance (b4) entre les éléments de retournement (25).

13. Procédé pour retourner des corps de boîtes au moyen d'éléments de retournement, **caractérisé par le fait que**, dans un dispositif selon l'une des revendications 1 à 12, une partie des éléments de retournement sont détachés de leur élément respectif de commande, de sorte que seulement un sur n corps de boîte (C), en particulier un sur deux, est retourné.
